# FASCICULE DE BREVET EUROPEEN

(11) **EP 1 947 386 B1**
(45) Date de publication et mention de la délivrance du brevet: **07.08.2013**
(21) Numéro de dépôt: 08356011.0
(22) Date de dépôt: 21.01.2008
(51) Int. Cl.: F28F 13/12, F24H 9/00, F23M 9/00

(54) **Turbulateur, notamment pour chaudière à tubes de fumées, et chaudière correspondante**
Heizgaswirbler, insbesondere für Rauchrohrkessel und entsprechender Kessel
Turbulator, in particular for a boiler with smoke pipes, and corresponding boiler

(30) Priorité: 22.01.2007 FR 0700414
(43) Date de publication de la demande: 23.07.2008
(73) Titulaire: Guillot Industrie, 01190 Pont de Vaux (FR)
(72) Inventeur: Renard, Jérôme, 71000 Macon (FR); Dutrop, Aymeric, 71700 Tournus (FR)
(74) Mandataire: Maureau, Philippe

(56) Documents cités:
- WO-A-02/057691
- DE-A1- 3 239 562
- DE-U1- 29 609 804
- FR-A- 1 571 281
- US-A- 1 632 888
- US-A- 2 067 133
- US-A- 4 401 101
- US-A- 5 544 625

## Description

L'invention concerne un turbulateur, notamment pour chaudière à tubes de fumées, une chaudière et un procédé de fabrication correspondant.

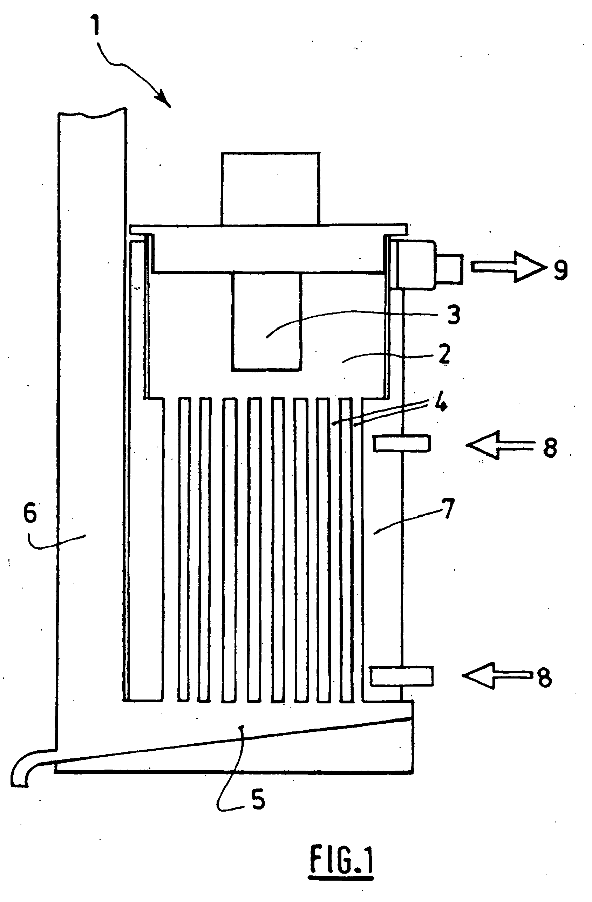

Les chaudières à tubes de fumées sont en particulier utilisées pour des installations nécessitant un débit important. Une chaudière de ce type est représentée en figure 1.

Ces chaudières 1 comportent une chambre de combustion 2 équipée d'un brûleur 3, à l'intérieur de laquelle les gaz de combustion sont brûlés et produisent des fumées.

Des tubes 4, disposés verticalement dans cet exemple, débouchent à une extrémité dans la chambre de combustion 2 et à l'autre extrémité dans une chambre d'évacuation 5, reliée à une cheminée 6.

La chaudière comporte en outre un volume d'eau à chauffer 7, en contact avec la paroi extérieure des tubes 4. L'eau issue de l'installation entre au niveau de la partie inférieure 8 et, après chauffage, est expulsée au niveau de la partie supérieure 9.

Les parois des tubes forment ainsi des échangeurs de chaleurs, la longueur et la quantité de tubes 4 influant sur les performances de la chaudière.

Un inconvénient apparaît du fait de l'écoulement laminaire des fumées issues de la chambre de combustion à l'intérieur des tubes, ou des couches limites laminaires apparaissant en régime turbulent.

En effet, dans ces deux cas, les fumées s'écoulent dans la direction longitudinale du tube en formant des veines distinctes.

Ainsi seules les fumées en contact avec la paroi interne du tube participent à l'échange thermique et se refroidissent, contrairement aux fumées chaudes s'écoulant dans la veine ou zone centrale du tube.

Par conséquent, le rendement de la chaudière reste faible en écoulement laminaire et les fumées à évacuer ont une température très importante.

Dans ce cas, il est nécessaire d'augmenter la longueur ou le nombre de tubes afin d'améliorer les performances de la chaudière. Il est en outre nécessaire de prévoir un dispositif d'évacuation adapté, de manière à résister aux fortes températures des fumées.

Afin de résoudre ces inconvénients, il est connu d'utiliser des turbulateurs disposés à l'intérieur des tubes, de manière à éviter l'écoulement laminaire.

Des turbulateurs sont décrits dans les documents US 1 632 888 et US 4 412 558. Ceux-ci se présentent sous forme de plaque pliée comportant une succession de lamelles contiguës constituant une forme de zig-zag.

Ce type de turbulateur présente, en vue de dessus, une forme générale rectangulaire de sorte que, une fois inséré dans le tube cylindrique, les espaces situés entre les bords du turbulateur et le tube peuvent constituer des zones d'écoulement laminaire, ce qui affecte le rendement de la chaudière comme vu précédemment.

Le document US 2 067 133 décrit un turbulateur présentant une forme générale à deux hélices imbriquées l'une dans l'autre, chaque hélice étant réalisée par une successions de lamelles planes inclinées les unes par rapport aux autres.

Ce turbulateur présente, entre les lamelles de chacune des hélices, des ouvertures permettant le passage du fluide au centre du tube, la forme particulière du turbulateur permettant de brasser le fluide sans créer de pertes de charge importantes.

Les performances d'un tel turbulateur reste toutefois limitées.

L'invention vise à remédier à ces inconvénients en proposant un turbulateur offrant un rendement maximum de la chaudière.

A cet effet, l'invention concerne un turbulateur, notamment pour chaudière à tubes de fumées dans laquelle les fumées circulent dans chaque tube d'une extrémité à une autre, le turbulateur étant destiné à être disposé dans un tube et étant constitué par un élément allongé en forme de lame comportant une succession de lamelles contiguës et présentant une forme de zig-zag, caractérisé en ce que les lamelles comportent une zone médiane de plus grande largeur que leur extrémités et comportent des bords convexes arrondis.

Le turbulateur présente ainsi, en vue de dessus, une forme arrondie adaptée à la forme du tube. L'espace entre les bords du turbulateur et le tube peut alors être considérablement réduit.

Le turbulateur selon l'invention affecte les fumées sur la majeure partie de la section du tube de manière à créer un brassage important. Ceci provoque une homogénéisation de la température sur la totalité de la section du tube et évite tout écoulement laminaire pouvant causer la présence de veines chaudes.

Avantageusement, les largeurs respectives de la zone médiane de deux lamelles successives augmentent dans le sens de circulation des fumées.

Du fait des échanges thermiques se produisant à l'intérieur du tube, la température des fumées en partie supérieure du tube, venant de la chambre de combustion, est très importante. Cette température est abaissée en partie basse du tube.

A débit constant, du fait de la dilatation des gaz à haute température, la vitesse des fumées est plus importante en partie haute qu'en partie basse du tube.

La perte de charge engendrée étant croissante avec la vitesse des fumées, celle-ci est très importante en partie haute du tube.

Il en résulte nécessairement un surdimensionnement des moyens d'injection des gaz de combustion.

La largeur réduite de la zone médiane dans la partie haute du tube permet de diminuer les pertes de charges créées dans cette partie du tube.

En outre, l'efficacité du turbulateur en partie haute du tube n'est pas sensiblement affectée par la section réduite du turbulateur. En effet, du fait des vitesses importantes des fumées dans cette zone, un régime turbulent est facilement établi et ne nécessite pas une section de déflection importante, comme cela est le cas en partie basse.

De plus, du fait de la faible vitesse des fumées en partie basse, une section importante du turbulateur n'entraîne pas une augmentation conséquente de la perte de charge.

Préférentiellement, les lamelles sont sensiblement planes.

Avantageusement, les zones de liaison entre deux lamelles successives sont disposées perpendiculairement à la direction longitudinale du turbulateur.

Selon une possibilité de l'invention, l'angle formé entre deux lamelles successives est compris entre 90 et 135°, préférentiellement de l'ordre de 120°.

Cet intervalle offre un bon compromis entre la quantité de matière nécessaire à la réalisation d'un turbulateur et l'efficacité de celui-ci.

Préférentiellement, la lamelle du turbulateur située en amont dans le sens de circulation des fumées comporte une largeur maximale comprise entre 55 et 85 % du diamètre intérieur du tube.

Avantageusement, la lamelle du turbulateur située en aval dans le sens de circulation des fumées comporte une largeur maximale comprise entre 80 et 95 % du diamètre intérieur du tube.

L'invention concerne en outre une chaudière à tubes de fumées, caractérisée en ce qu'elle comporte au moins un turbulateur selon l'invention, inséré dans au moins un tube de fumées.

L'invention concerne de plus un procédé de fabrication de turbulateurs selon l'invention, à partir d'une feuille ou tôle en matériau résistant à la corrosion et à la température, par exemple en acier inoxydable réfractaire, caractérisé en ce qu'il comporte les étapes suivantes :
- découpage de la feuille de manière à définir les contours des turbulateurs tout en formant des points de jonction sécables entre le turbulateur et la feuille,
- pliage ou emboutissage de la feuille,
- rupture des points de jonction sécables de manière à séparer les turbulateurs de la feuille.

Avantageusement, les turbulateurs sont découpés de manière à ce qu'ils soient disposés tête bêche.

Cette caractéristique permet de limiter les chutes de la feuille ou de la tôle en acier, notamment dans le cas où la largeur maximale des lamelles varie progressivement.

De toute façon, l'invention sera bien comprise à l'aide de la description qui suit, en référence au dessin schématique annexé représentant, à titre d'exemple non limitatif, une forme d'exécution de ce turbulateur.
Figure 1 est une vue schématique d'une chaudière à tubes de fumées de l'art antérieur ;
Figure 2 est une vue en coupe médiane d'un tube dans lequel est inséré un turbulateur selon l'invention ;
Figure 3 est une vue de côté du turbulateur,
Figure 4 est une vue en coupe A-A du tube et du turbulateur ;
Figure 5 est une vue de dessus du tube et du turbulateur.

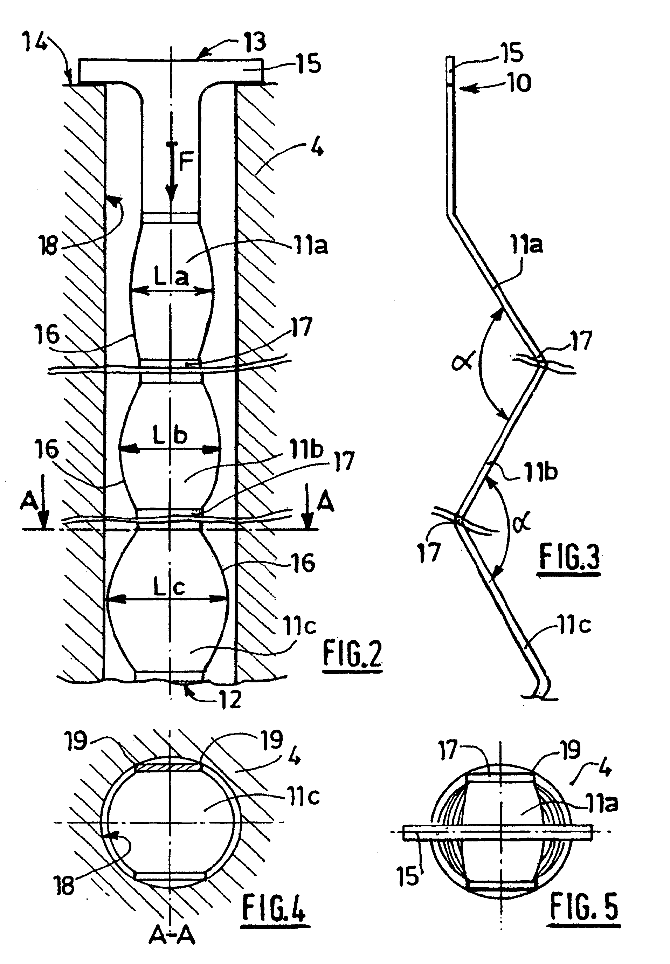

Les figures 2 et 3 représentent un turbulateur selon l'invention. Plus particulièrement, la figure 2 représente le turbulateur en position dans un tube de chaudière.

Un turbulateur 10 représenté au dessin est constitué par un élément allongé en forme de lame comportant une succession de lamelles contiguës 11 constituant une forme de zig-zag, c'est-à-dire s'étendant obliquement et alternativement dans deux directions opposées de manière à définir un motif périodique.

Le turbulateur 10 est inséré dans un tube correspondant 4 par une première extrémité 12 et vient reposer, au niveau d'une seconde extrémité 13, contre le bord supérieur 14 du tube 4 par l'intermédiaire d'une barre d'appui transversale 15 de longueur supérieure au diamètre du tube 4.

Seules 3 lamelles ont été représentées aux figures 2 et 3, bien que le turbulateur 10 puisse comporter un nombre plus important de lamelles 11. Pour des raisons de lisibilité du dessin, seules les lamelles situées respectivement en partie haute 11a, médiane 11 b et basse 11 c du tube ont été représentées.

Chaque lamelle 11 comporte des bords 16 convexes arrondis. Les largeurs maximales La, Lb, Lc de trois lamelles successives augmentent dans le sens F d'écoulement des fumées. C'est ainsi que la lamelle située en partie haute 11a est moins large que celle située en partie basse 11 b.

A titre d'exemple, pour un tube 4 de diamètre interne égal à 33 mm, la largeur maximale de la lamelle située en partie haute 11a du tube 4 est de l'ordre de 20 mm. De même, la largeur maximale de la lamelle située en partie basse 11 c du tube 4 est de l'ordre de 30 mm.

Pour un tube 4 d'une longueur d'environ 600 mm, le turbulateur comporte entre 10 et 20 lamelles suivant l'angle de pliage α.

Le turbulateur 10 est réalisé par pliage à partir d'un élément en acier inoxydable réfractaire, de manière à obtenir des lamelles sensiblement planes 11 dont les plis 17 sont disposés perpendiculairement à l'axe longitudinal A du turbulateur 10 et dont les angles de pliage α sont constants.

L'angle α formé entre deux lamelles 11 successives est compris entre 90 et 135°, préférentiellement de l'ordre de 120°.

L'angle α et la dimension des lamelles 11 sont adaptés de sorte que le turbulateur 10 vienne se positionner, par l'intermédiaire des zones de pli 17 situées entre les lamelles, contre la paroi interne 18 du tube 4.

Chaque bord 19 des zones de pli 17 vient ainsi en contact de la paroi interne 18 du tube 4, de sorte que le turbulateur 10 soit correctement positionné à l'intérieur du tube 4, comme représenté aux figures 4 et 5.

Les étapes du procédé de fabrication du turbulateur 10 sont détaillées ci-après.

On utilise une feuille ou tôle en acier inoxydable réfractaire, sur laquelle le contour de plusieurs turbulateurs est découpé au laser. Plus précisément, on réalise une découpe incomplète de manière à former des points de jonction sécables. Les turbulateurs sont disposés tête-bêche de manière à réduire les chutes après découpe. Une opération de pliage ou d'emboutissage permet ensuite de former les plis selon un angle prédéterminé. Enfin, chaque turbulateur est détaché de la feuille en sectionnant les points de jonction correspondant.

Bien évidemment, la découpe peut être réalisée par tout moyen connu et les turbulateurs peuvent ne pas être disposés tête bêche.

Le turbulateur permet d'obtenir des résultats considérablement accrus par rapport aux turbulateurs de l'art antérieur. Ces résultats sont présentés ci-après à l'aide d'exemples illustrant plusieurs configurations différentes de turbulateurs.

Pour chaque exemple, sauf indication contraire, la température des fumées en partie haute du tube est de l'ordre de 1000°C, le turbulateur comporte 20 lamelles, le diamètre intérieur du tube est égal à 33 mm et l'angle de pliage est égal à 90°.

Les paramètres permettant d'évaluer l'efficacité du turbulateur sont la température des fumées en sortie, c'est-à-dire en partie basse du tube ainsi que la perte de charge engendrée.

Pour un turbulateur à section constante et rectangulaire en vue de dessus, correspondant aux turbulateurs du type de ceux décrits dans les documents US 1 632 888 et US 4 412 558, avec une largeur constante des lamelles de l'ordre de 22 mm, on obtient une température de sortie des fumées importante, de l'ordre de 116 °C, et une perte de charge de l'ordre de 50 Pa.

Dans des conditions similaire, le turbulateur décrit dans le document US 2 067 133 permet d'obtenir une perte de charge moindre, de l'ordre de 19 Pa mais avec une température de sortie des fumées très importante, de l'ordre de 130,9 °C.

Pour un turbulateur selon l'invention comportant des bords arrondis comme décrit précédemment, avec des lamelles de section identique, quelle que soit leur position dans le tube, chaque lamelle présentant une zone médiane d'une largeur maximale de 29 mm et une largeur minimale aux plis de 20,6 mm, on obtient une température de sortie des fumées de l'ordre de 84 °C et une perte de charge de l'ordre de 186 Pa.

On constate, comme vu dans précédemment, qu'une section de forme arrondie permet d'augmenter les échanges de chaleur et donc de diminuer la température des fumées. Cependant, cette amélioration du rendement de la chaudière est réalisée au détriment d'une augmentation sensible des pertes de charge.

Pour un turbulateur selon l'invention, comportant des lamelles de section arrondie et dont la largeur maximale varie progressivement en fonction de la position de la lamelle correspondante dans le tube, avec les caractéristiques suivantes :
- largeur maximale de la lamelle située en partie haute du tube : 24,7 mm,
- largeur maximale de la lamelle située en partie basse du tube : 30,6 mm,
on obtient une température de sortie des fumées de l'ordre de 86 °C et une perte de charge de l'ordre de 154 Pa.

On remarque que, par comparaison avec l'exemple précédent, la progressivité de la taille des lamelles permet de diminuer sensiblement la perte de charge tout en ayant peu d'effet sur la température de sortie des fumées, c'est-à-dire sur la performance du turbulateur.

Si, en partant des caractéristiques de l'exemple précédent, on réalise un angle de pliage plus ouvert, par exemple de 115°, il est possible de réduire le nombre de lamelles, à savoir 12 lamelles dans ce cas, tout en diminuant la perte de charge sans augmenter sensiblement la température de sortie des fumées.

On obtient ainsi une température de sortie des fumées de l'ordre de 87°C et une perte de charge de l'ordre de 97 Pa.

Comme il va de soi, l'invention ne se limite pas aux seules formes de réalisation de cet ensemble, décrites ci-dessus à titre d'exemples, mais elle embrasse au contraire toutes les variantes telles que définies par les revendications. C'est ainsi notamment que le turbulateur peut être utilisé pour des chaudières à tubes de fumées dans lesquelles les tubes ne sont pas disposés verticalement.

## Revendications

1. Turbulateur (10), notamment pour chaudière (1) à tubes de fumées (4) dans laquelle les fumées circulent dans chaque tube d'une extrémité à une autre, le turbulateur étant destiné à être disposé dans un tube et étant constitué par un élément allongé en forme de lame comportant une succession de lamelles contiguës (11a, 11b, 11c) et présentant une forme de zig-zag, **caractérisé en ce que** les lamelles (11 a, 11 b, 11 c) comportent une zone médiane de plus grande largeur (La, Lb, Lc) que leur extrémités et comportent des bords convexes arrondis (16).

2. Turbulateur (10) selon la revendication 1, **caractérisé en ce que** les largeurs respectives (La, Lb, Lc) de la zone médiane de deux lamelles successives (11a, 11 b, 11 c) augmentent dans le sens de circulation des fumées.

3. Turbulateur (10) selon l'une des revendications 1 et 2, **caractérisé en ce que** les lamelles (11 a, 11 b, 11 c) sont sensiblement planes.

4. Turbulateur (10) selon l'une des revendications 1 à 3, **caractérisé en ce que** les zones de liaison (17) entre deux lamelles successives (11a, 11b, 11c) sont disposées perpendiculairement à la direction longitudinale (A) du turbulateur (10).

5. Turbulateur (10) selon l'une des revendications 1 à 4, **caractérisé en ce que** l'angle (α) formé entre deux lamelles successives (11 a, 11 b, 11 c) est compris entre 90 et 135°, préférentiellement de l'ordre de 120°.

6. Turbulateur (10) selon l'une des revendications 2 à 5, **caractérisé en ce que** la lamelle du turbulateur (10) située en amont (11a) dans le sens de circulation des fumées (F) comporte une largeur maximale (La) comprise entre 55 et 85 % du diamètre intérieur du tube (4).

7. Turbulateur (10) selon l'une des revendications 2 à 6, **caractérisé en ce que** la lamelle du turbulateur (10) située en aval (11c) dans le sens de circulation des fumées (F) comporte une largeur maximale (Lc) comprise entre 80 et 95 % du diamètre intérieur du tube (4).

8. Chaudière (1) à tubes de fumées (4), **caractérisée en ce qu'**elle comporte au moins un turbulateur (10) selon l'une des revendications 1 à 7, inséré dans au moins un tube de fumées (4).

9. Procédé de fabrication de turbulateurs selon l'une des revendications 1 à 7, à partir d'une feuille ou tôle en matériau résistant à la corrosion et à la température, par exemple en acier inoxydable réfractaire, **caractérisé en ce qu'**il comporte les étapes suivantes :
- découpage de la feuille de manière à définir les contours des turbulateurs tout en formant des points de jonction sécables entre le turbulateur et la feuille,
- pliage ou emboutissage de la feuille,
- rupture des points de jonction sécables de manière à séparer les turbulateurs de la feuille.

10. Procédé de fabrication de turbulateurs selon la revendication 9, **caractérisé en ce que** les turbulateurs sont découpés de manière à ce qu'ils soient disposés tête bêche.

## Patentansprüche

1. Turbulator (10), insbesondere für einen Kessel (1) mit Rauchrohren (4), in dem der Rauch in jedem Rohr von einem Ende zum anderen umläuft, wobei der Turbulator ausgelegt ist, in einem Rohr angeordnet zu sein, und aus einem länglichen Element in Form einer Klinge besteht, umfassend einer Aufeinanderfolge von benachbarten Lamellen (11a, 11 b, 11 c) und aufweisend eine Zigzag-Form, **dadurch gekennzeichnet, dass** die Lamellen (11a, 11 b, 11c) einen mittleren Bereich umfassen, der eine größere Breite(La, Lb, Lc) als ihre Enden aufweisen und abgerundete konvexe Ränder (16) umfassen.

2. Turbulator (10) nach Anspruch 1, **dadurch gekennzeichnet, dass** sich die entsprechenden Breiten (La, Lb, Lc) des mittleren Bereichs von zwei aufeinander folgenden Lamellen (11a, 11 b, 11c)in der Umlaufrichtung des Rauchs erhöhen.

3. Turbulator (10)nach einem der Ansprüche 1 und 2, **dadurch gekennzeichnet, dass** die Lamellen (11a, 11 b, 11c) im Wesentlichen eben sind.

4. Turbulator (10) nach einem der Ansprüche 1 bis 3, **dadurch gekennzeichnet, dass** die Verbindungsbereiche (17) zwischen zwei aufeinander folgenden Lamellen (11 a, 11 b, 11c)senkrecht zur Längsrichtung (A) des Turbulators (10) angebracht sind.

5. Turbulator (10) nach einem der Ansprüche 1 bis 4, **dadurch gekennzeichnet, dass** der Winkel (α), der zwischen zwei aufeinander folgenden Lamellen (11a, 11 b, 11c) gebildet ist, .zwischen 90 und 135°, vorzugsweise im Bereich von 120° liegt.

6. Turbulator (10) nach einem der Ansprüche 2 bis 5, **dadurch gekennzeichnet**, dassdie Lamelle des Turbulators (10), die sich vorgelagert (11a) in der Richtung des Umlaufs des Rauchs (F) befindet, eine maximale Breite (La) umfasst, die zwischen 55 und 85 % des inneren Durchmessers des Rohrs (4) liegt.

7. Turbulator (10) nach einem der Ansprüche 2 bis 6, **dadurch gekennzeichnet, dass** die Lamelle des Turbulators (10), die sich nachgelagert(11c) in der Richtung des Umlaufs des Rauchs (F) befindet, eine maximale Breite (Lc) umfasst, die zwischen 80 und 95 % des inneren Durchmessers des Rohrs (4) liegt.

8. Kessel (1) mit Rauchrohren (4), **dadurch gekennzeichnet, dass** er mindestens einen Turbulator (10) nach einem der Ansprüche 1 bis 7 umfasst, der in mindestens ein Rauchrohr (4) eingeführt ist.

9. Verfahren zur Herstellung von Turbulatoren nach einem der Ansprüche 1 bis 7 aus einem Blatt oder Blech aus gegen Rost und Temperatur resistentem Material, z.B. aus refraktärem rostfreiem Stahl, **dadurch gekennzeichnet,dass** es die folgenden Schritte umfasst:
- Schneiden des Blatts, um die Umrisse der Turbulatoren zu definieren und gleichzeitig trennbaren Verbindungspunkte zwischen dem Turbulator und dem Blatt zu bilden,
- Biegen oder Hohlprägen des Blatts,
- Brechen der trennbaren Verbindungspunkte, um die Turbulatoren vom Blatt zu trennen.

10. Verfahren zur Herstellung von Turbulatoren nach Anspruch 9, **dadurch gekennzeichnet, dass** die Turbulatoren so geschnitten sind, dass sieinvertiert angeordnet sind.

## Claims

1. A turbulator (10), in particular for a boiler (1) with smoke pipes (4) in which the smoke circulates in each pipe from one end to the other, the turbulator being designed to be arranged in a pipe and being made up of a blade-shaped elongated element including a series of adjacent strips (11a, 11b, 11c) and having a zigzag shape, **characterized in that** the strips (11a, 11b, 11c) include a middle area with a larger width (La, Lb, Lc) than their ends and having rounded convex edges (16).

2. The turbulator (10) according to claim 1, **characterized in that** the respective widths (La, Lb, Lc) of the middle area of two successive strips (11a, 11 b, 11 c) increase in the direction of circulation of the smoke.

3. The turbulator (10) according to one of claims 1 and 2, **characterized in that** the strips (11 a, 11 b, 11 c) are substantially planar.

4. The turbulator (10) according to one of claims 1 to 3, **characterized in that** the connecting areas (17) between two successive strips (11 a, 11 b, 11 c) are arranged perpendicular to the longitudinal direction (A) of the turbulator (10).

5. The turbulator (10) according to one of claims 1 to 4, **characterized in that** the angle (a) formed between two successive strips (11a, 11 b, 11 c) is comprised between 90 and 135°, preferably approximately 120°.

6. The turbulator (10) according to one of claims 2 to 5, **characterized in that** the strip of the turbulator (10) situated upstream (11a) in the direction of circulation of the smoke (F) has a maximum width (La) comprised between 55 and 85% of the inner diameter of the pipe (4).

7. The turbulator (10) according to one of claims 2 to 6, **characterized in that** the strip of the turbulator (10) situated downstream (11c) in the direction of circulation of the smoke (F) has a maximum width (Lc) comprised between 80 and 95% of the inner diameter of the pipe (4).

8. A boiler (1) with smoke pipes (4), **characterized in that** it includes at least one turbulator (10) according to one of claims 1 to 7, inserted into at least one smoke pipe (4).

9. A method for manufacturing turbulators according to one of claims 1 to 7, from a sheet or sheet metal of a material withstanding corrosion and temperature, for example refractory stainless steel, **characterized in that** it includes the following steps:
- cutting the sheet so as to define the contours of the turbulators while forming breakable junction points between the turbulator and the sheet,
- folding or stamping the sheet,
- breaking the breakable junction points so as to separate the turbulators from the sheet.

10. The method for manufacturing turbulators according to claim 9, **characterized in that** the turbulators are cut such that they are arranged head-to-tail.
